# EUROPEAN PATENT APPLICATION

(11) **EP 4 604 033 A1**
(43) Date of publication of application: **20.08.2025**
(21) Application number: 25157663.3
(22) Date of filing: 13.02.2025
(51) Int. Cl.: G06Q 10/0631, G06Q 10/0633, G06Q 10/0639

(54) **OPERATIONAL REASONING SYSTEM AND METHOD**

(30) Priority: 13.02.2024 US 202418440438
(71) Applicant: Rockwell Collins, Inc., Cedar Rapids, IA 52498 (US)
(72) Inventor: HERTZ, Benjamin J., Cedar Rapids, IA (US); BERGER, Andrew K., Houston, TX (US); HIGGINS, Matthew T., Marion, IA (US); JORDAN, Jack N., Cedar Rapids, IA (US); OLSON, Ryan J., Lake Leeelanau, MI (US)
(74) Representative: Dehns

(57) **Abstract**

An operational reasoning system and method for assignment of accessible assets to a set of tasks includes one or more processors and a memory. The one or more processors receive an objective associated with a mission, where the objective implies a set of tasks. The one or more processors identify one or more accessible assets associated with the mission and determine a plan for assigning the one or more accessible assets to the set of tasks. The one or more processors further provide one or more insights to an operator, where the one or more insights are associated with a rationale behind the determination of the plan. The one or more processors ultimately provide an outcome assessment to the operator, where the outcome assessment includes one or more likely outcomes associated with the plan.

## Description

### TECHNICAL FIELD

The present disclosure relates generally to an operational reasoning system and, more particularly, to an operational reasoning system and method for assigning a sequence of tasks to one or more accessible assets based on an operational context, facilitating human autonomy teaming and leveraging decision aids for enhanced decision-making.

### BACKGROUND

In high-stress or rapidly changing environments, it is often difficult for human operators to effectively plan and deploy commandable resources to achieve a set of tasks. In general, decision-making frameworks in Al and machine learning (Al/ML) applications may face a series of challenges, particularly in scenarios where tasks involve real-time and highly complex decision-making by human operators. While intelligent decision-making algorithms can potentially offload the planning burden put on the operator, their adoption is contingent upon the availability of robust decision aids that operators can trust, comprehend, and reason about in real-time.

Existing methodologies often lack the adaptability and extensibility required to handle a diverse range of task-asset assignment problems prevalent in various domains. The trust and understanding of the decision-making process by human operators are crucial factors influencing the successful integration of AI/ML systems in high-stakes environments. Therefore, it would be desirable to provide a system and method that cure the shortfalls of the previous approaches identified above.

### SUMMARY

A system is disclosed, in accordance with one or more embodiments of the present disclosure. In one embodiment, the system includes a server comprising a memory and one or more processors. In other embodiments, the one or more processors receive an objective associated with a mission, where the objective implies a set of tasks. In other embodiments, the one or more processors identify one or more accessible assets associated with the mission. In other embodiments, the one or more processors determine a plan for assigning the one or more accessible assets to the set of tasks. In other embodiments, the one or more processors provide one or more insights to a user, where the one or more insights are associated with a rationale behind the determination of the plan. In other embodiments, the one or more processors provide an outcome assessment to the user wherein the outcome assessment includes one or more likely outcomes associated with the plan.

A method is disclosed, in accordance with one or more embodiments of the present disclosure. In one embodiment, the method may include, but is not limited to, receiving an objective associated with a mission, where the objective implies a set of tasks. In other embodiments, the method may include, but is not limited to, identifying one or more accessible assets associated with the mission. In other embodiments, the method may include, but is not limited to, determining a plan for assigning the one or more accessible assets to the set of tasks. In other embodiments, the method may include, but is not limited to, providing one or more insights to a user, where the one or more insights are associated with a rationale behind the determination of the plan. In other embodiments, the method may include, but is not limited to, providing an outcome assessment to the user wherein the outcome assessment includes one or more likely outcomes associated with the plan.

It is to be understood that both the foregoing general description and the following detailed description are exemplary and explanatory only and are not necessarily restrictive of the invention as claimed. The accompanying drawings, which are incorporated in and constitute a part of the specification, illustrative embodiments of the invention and together with the general description, serve to explain the principles of the invention.

### BRIEF DESCRIPTION OF DRAWINGS

The numerous advantages of the disclosure may be better understood by those skilled in the art by reference to the accompanying figures in which:
FIG. 1 illustrates an operational reasoning system including an Operational Reasoner Framework (ORF) for assigning one or more assets to a set of tasks, in accordance with one or more embodiments of the present disclosure.
FIG. 2 illustrates a simplified block diagram for training an outcome assessment model of the ORF, in accordance with one or more embodiments of the present disclosure.
FIGS. 3A-3C illustrate a display of one or more outputs of the ORF, in accordance with one or more embodiments of the present disclosure.
FIG. 4 illustrates a conceptual implementation of the ORF, in accordance with one or more embodiments of the present disclosure.
FIG. 5 illustrates a conceptual implementation of the ORF, in accordance with one or more embodiments of the present disclosure.
FIG. 6 illustrates a conceptual implementation of the ORF, in accordance with one or more embodiments of the present disclosure.
FIG. 7 illustrates a conceptual implementation of the ORF, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Broadly speaking, embodiments of the inventive concepts disclosed herein are directed to an operational reasoning system and method for assigning one or more accessible assets to a set of tasks. In embodiments, the system provides a set of software modules, a software architecture, and the operational reasoning framework (ORF) (i.e., an artificial intelligence (AI) framework). Unlike traditional planning systems, the emphasis is not solely on a specific planning system but rather on a common software framework capable of addressing various problem domains. The ORF is able to integrate with different planners, each employing distinct technology or implementations tailored to specific domains. The primary goal is to generate a plan, comprising tasks or task sequences, and allocate assets effectively. Further, the ORF extends beyond mere plan generation, incorporating specific decision aids crucial for human evaluation and action. The ORF may be designed to communicate with various entities to determine a plan for assigning one or more assets to a set of tasks based on an operational context. As such, it will be advantageous to define various terms prior to describing embodiments of the present disclosure.

The term "operator," as it applies to the present disclosure, refers to a human being interacting with an operational reasoner framework implementation through a domain specific user interface (e.g., human machine interface (HMI)). The operator may interact with a user interface to manually adjust one or more aspects of the plan. For example, the operator may input one or more constraints via the user interface to help focus or provide a bias to the models.

The term "asset," as it applies to the present disclosure, refers to an entity that is accessible to the operational reasoner framework implementation and capable of executing one or more tasks. For example, an asset may include, but is not limited to, a machine having autonomous capabilities, a human, or human/machine combination. By way of another example, data may be associated with the assets which includes, but is not limited to, an asset's capabilities (e.g., types, quantities, parameters), health, location, playtime, and the like.

The term "objective," as it applies to the present disclosure, refers to a highest-level goal of the system. Objectives may include, but are not limited to, parameters, priority, constraints, and the like. For example, the system may assign a high priority level or weight to the objective. Whereas, the term "task," as it applies to the present disclosure, refers to a lower-level goal that is essential for achieving the objective. It is important to note that not all tasks are mandatory for achieving an objective, and some tasks may include dependencies on other tasks. For example, a set of tasks may be generated for a specific mission, based on a given operational context, where one or more accessible assets are assigned to each task. Tasks may include, but are not limited to, capability requirements, location, constraints, status, dependencies, and the like.

The term "subtask," as it applies to the present disclosure, refers to a lowest-level action required to execute a task. The system may not engage in reasoning about these subtasks, nor does it impose any constraints on how a task should be executed or subdivided, except for the assignment of one or more assets responsible for the task. The term "supertask," as it applies to the present disclosure, refers to a collection of tasks intended to be assigned collectively. For example, supertasks may be grouped together based on clustering algorithms that consider characteristics such as geolocation. It is noted herein that the applicability of supertasks may vary across domains, and they are not mandatory in all domains.

The term "plan," as it applies to the present disclosure, refers to a compilation of all asset-task assignments generated by the system. For example, the plan may include one or more accessible assets assigned to one or more tasks; however, the plan may include a task having zero or more assets assigned to it. For instance, as tasks are fulfilled, the plan may allow for one or more assets to undergo reassignment throughout the operation, reflecting the dynamic nature of the decision-making process in the system.

The term "execution," refers to the implementation of a plan. For example, the planning sub-system of the ORF does not assume responsibility for the intricate details of execution. Rather, it may facilitate operator engagement through in/on/outside the loop functions, leveraging domain-specific user interfaces (e.g., HMI elements), ensuring that the ORF plays a supportive role in the execution phase without dictating specific execution details.

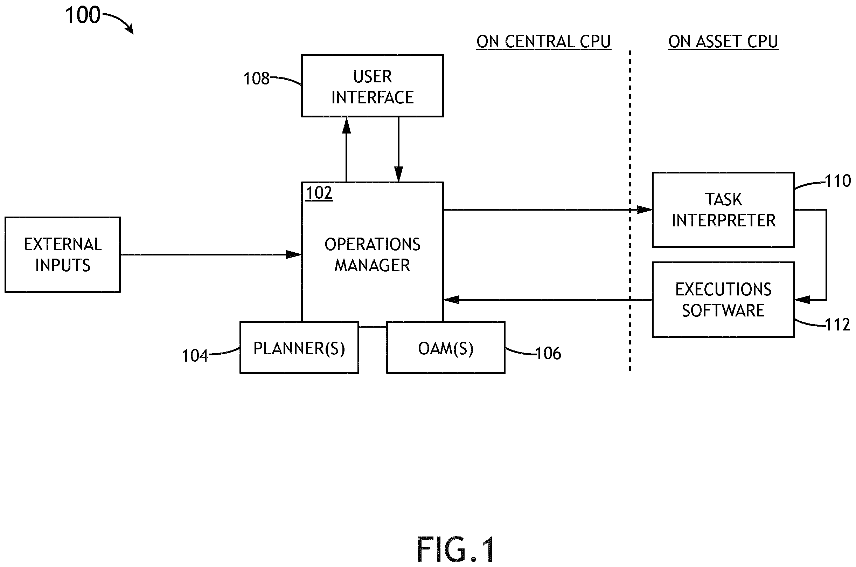

Referring now to FIG. 1, an operational reasoning system 100 including an operational reasoning framework (ORF) for assigning one or more assets to a set of tasks is illustrated, in accordance with one or more embodiments of the present disclosure. The system 100 may include a server having one or more processors and a memory (e.g., or other appropriate data storage). For example, the system 100 may include one or more modules configured for execution on a single processor or multi-core processing environment.

In embodiments, the one or more modules are configured to achieve one or more goals associated with a domain specific mission. For example, one or more primary goals may include, but is not limited to, providing an operator with a plan, helping the operator understand why the suggested plan was chosen, and helping the operator understand the likely outcomes of executing the plan. The one or more primary goals may be consistent and applicable across all domains where the system 100 is implemented. By way of another example, one or more secondary goals may include, but are not limited to, providing an operator with a set of tasks and tasks statuses, and enabling an asset to interpret an assigned task and leverage existing task execution software 112.

In embodiments, one of the one or more modules of system 100 includes an operations manager 102. For example, the operations manager 102 may serve as the central hub of system 100 and may be configured to receive one or more inputs from the one or more assets and/or modules of system 100, or any additional assets or modules that are configured to interact with system 100. The one or more inputs may include state data including, but not limited to, environmental data (e.g., enemy location, flight diversion, and the like), an objective, operator input, one or more tasks, and one or more task statuses. By way of another example, the operations manager 102 is configured to provide one or more outputs to the one or more assets and/or modules of system 100, or any of the additional assets or modules that are configured to interact with system 100. The one or more outputs may include, but are not limited to, a set of tasks, a plan, one or more assets, an outcome assessment, one or more insights, and one or more task commands.

In embodiments, the operations manager 102 is configured to create and maintain a list of assignable tasks using domain specific logical rules based on at least the state data received (e.g., an environment, an objective, one or more accessible assets, and one or more operator inputs).

In embodiments, the operations manager 102 is configured to consolidate two or more tasks sharing one or more characteristics into a super task through utilization of a clustering technique. For example, by consolidating two or more tasks into a single task, the clustering technique may improve a spatial reasoning, reduce complexity, improve coordination, and facilitating more effective management of resources within the operations manager 102.

In embodiments, the operations manager 102 is configured to leverage one or more functions of a planner 104 module. For example, the operations manager 102 may utilize the capabilities of the planner 104 to impose domain-related or operator-specified restrictions on the planner 104. This may be achieved through the modification of inputs of the planner 104 or through the post-processing of outputs of the planner 104 using domain-specific logical rules. By exercising this responsibility, the operations manager 102 effectively tailors the decision-making process to align with the specific requirements and constraints of the operational domain. Moreover, the ability to apply logical rules in both the pre-processing and post-processing phases ensures a highly adaptable and customizable approach, allowing the operations manager 102 to finely tune the functionality of the planner 104 in accordance with the operational context and objectives of system 100.

In embodiments, within system 100, the operations manager 102 is further configured to track one or more task statuses and dependencies. This involves the processing of task state outputs generated by asset execution software 112. For example, domain-specific logical rules may be applied to enhance the effectiveness of this tracking process. By incorporating these rules, the operations manager 102 gains the capability to systematically manage and monitor the progression of tasks, ensuring a comprehensive understanding of their statuses and interdependencies. This may enable the operations manager 102 to dynamically respond to changes, implement adjustments, and maintain a synchronized and coherent task execution environment based on the unique requirements of the operational domain.

In embodiments, the operations manager 102 is configured to leverage one or more instances of an outcome assessment model 106 (OAM) within the system 100. For example, the operations manager 102 may impose domain-related or operator-specified restrictions on the OAMs 106. This may be accomplished through the modification of inputs to the OAM 106 or the post-processing of outputs from the OAM 106 using domain-specific logical rules. By exercising this authority, the operations manager 102 ensures that the models encapsulated within the OAM 106 are aligned with the specific constraints of the operational domain. Further, the application of domain-specific logical rules, both in input modifications and post-processing, enables the operations manager 102 to finely calibrate the behavior of the models, fostering adaptability and customization tailored to the dynamic requirements of the operational context.

In embodiments, the operations manager 102 is configured to serve as the backend interface between the system 100 and the operator. For example, the operations manager 102 may be configured to broadcast one or more outputs and handle domain-specific operator inputs, while ensuring that relevant information is disseminated effectively. By functioning in this capacity, the operations manager 102 plays a critical role in bridging the gap between the outputs and the specific inputs of system 100, provided by the operator within the operational domain. Further, this configuration may enhance operational efficiency, fostering a streamlined exchange of information and instructions between the system 100 and the operator.

In embodiments, the operations manager 102 is configured to track a "what-if" state based on changing input state conditions, allowing for the assessment of potential impacts resulting therefrom. This feature may provide valuable insight into the dynamic nature of the system 100, offering a preview of how alterations may influence the plan and subsequent outcome assessments.

In embodiments, the operations manager 102 is configured to track a secondary or tertiary plan, each formulated with distinct objectives differing from the primary plan. This multi-plan approach enhances the adaptability of the system 100, accommodating diverse scenarios and objectives within the operational context.

In embodiments, the operations manager 102 is equipped to log an execution trace, capturing a comprehensive record of the operational sequence for post-operation analysis. For example, the operator may undergo an in-depth examination and evaluation of the executed plan, contributing to the refinement and optimization of future operational strategies.

In embodiments, one of the one or more modules of the system 100 include OAMs 106. For example, the OAMs 106 may be configured to receive state data including, but not limited to, environment data, an objective, one or more accessible assets, a set of tasks, and one or more task statuses. By way of another example, the OAMs 106 may be configured to perform an outcome assessment and provide one or more insights (e.g., explainability metrics) and one or more likely outcomes associated with the plan based on the performed outcome assessment. The one or more insights may be associated with a rationale behind how the plan was determined. Whereas, the one or more likely outcomes may include a percentage associated with a likelihood of that particular outcome occurring. The outcome assessment model is described generally in U.S. Patent Application No. 17/873,086, filed on July 25, 2022, which is incorporated herein by reference in the entirety.

In embodiments, the system 100 includes a task interpreter 110 communicatively coupled to the operations manager 102. For example, the task interpreter 110 may receive a set of tasks and a plan from the operations manager 102. By way of another example, the task interpreter 110 may be configured to determine what the task is based on the received task list and plan. The task interpreter 110 may correspond to a particular asset of the one or more accessible assets and may interact with the onboard execution software 112 of the corresponding asset. The execution software 112 may allow the task interpreter 110 to leverage various capabilities associated with the corresponding asset. By way of another example, the task interpreter 110 may be configured to determine if there are any teammates sharing a same assigned task. In the case that there is more than one asset assigned to a task, the task interpreter 110 is configured to ensure execution software 112 is aware so that the assigned assets may work together in a distributed way.

It is noted herein that the task interpreter 110 is not required in the case where a task is able to map directly to an execution behavior. For example, the operations manager 102 may communicate directly with the asset execution software 112, thus, eliminating the need for a task interpreter 110. It is further noted that, in some domains, an asset may be a human or human controlled. For instance, task interpretation execution and state reporting may be completed by a domain appropriate combination of human and computer.

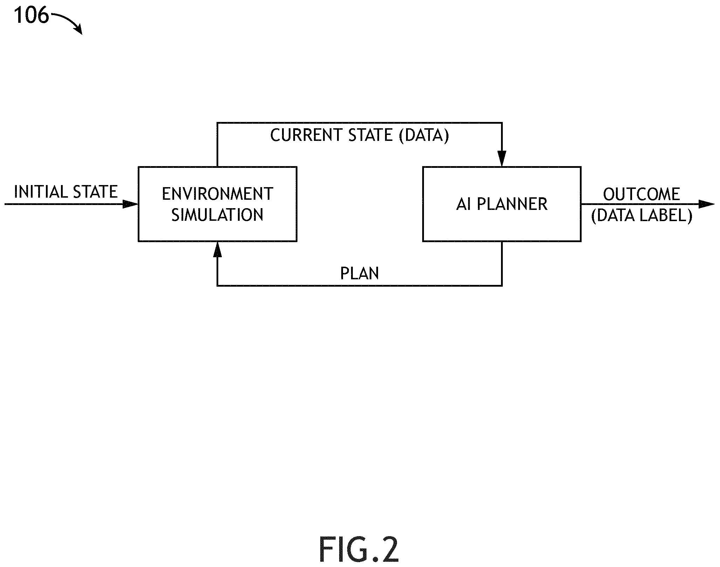

FIG. 2 illustrates a simplified block diagram for training an OAM 106 of the ORF, in accordance with one or more embodiments of the present disclosure.

In embodiments, the planner 104 is configured to determine and output a plan for assigning one or more accessible assets to one or more tasks of the set of tasks. For example, the plan may be derived from a series of one or more simulations, drawing upon trained data which is often obtained through a reinforcement learning process. For example, the planner 104 may be configured to serve as an intelligent decision maker (e.g., Al planner) of the system 100 and may be configured to receive one or more inputs from the one or more assets and/or modules of system 100, or any additional assets or modules that are configured to interact with system 100. The input received by the planner 104 may include state data including, but not limited to, environmental data, an objective, assets, one or more tasks, and a plan, with the specific parameters of the state data tailored to the nuances of the particular domain. By way of another example, the planner 104 may be configured to utilize any neural network structure known in the art for fulfilling the objectives of the given operation. It is noted herein that particular domains may benefit from the integration of a rule-based planning algorithm as a supplement to the planner 104. The planner 104 is described generally in U.S. Patent Application No. 18/234,646, filed on August 8, 2023, which is incorporated herein by reference in the entirety. It is further noted that the planner 104 of the ORF is not limited to the planning system described in the reference above, but may include any planning system for any ORF implementation known in the art.

In embodiments, the effectiveness of the plan is ensured through the use of a simulation executed on a domain-specific basis, where the simulation is able to perform at a rate that is faster-than-real-time performance. Moreover, the simulation may represent the real-world environment with a requisite level of trustworthiness, enabling the planner 104 to make high-quality decisions, confidently. Subsequently, the planner 104 is configured to communicate the derived plan to the operations manager 102, leveraging insights gained from Al training processes. This holistic approach ensures a dynamic and adaptive planning system, capable of addressing the diverse and evolving demands within different operational domains.

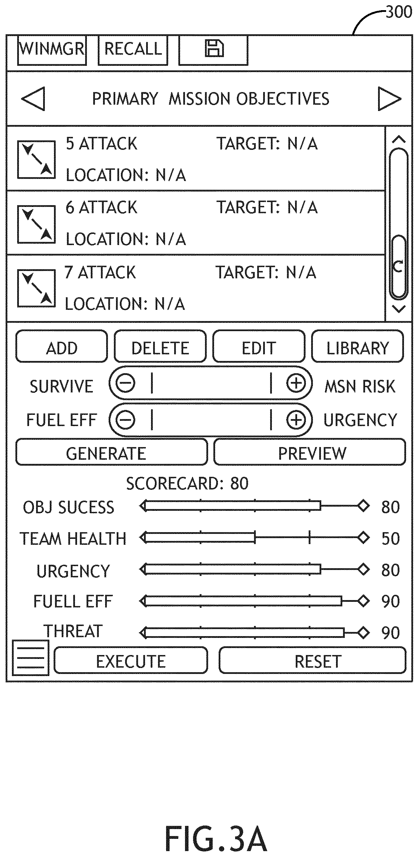

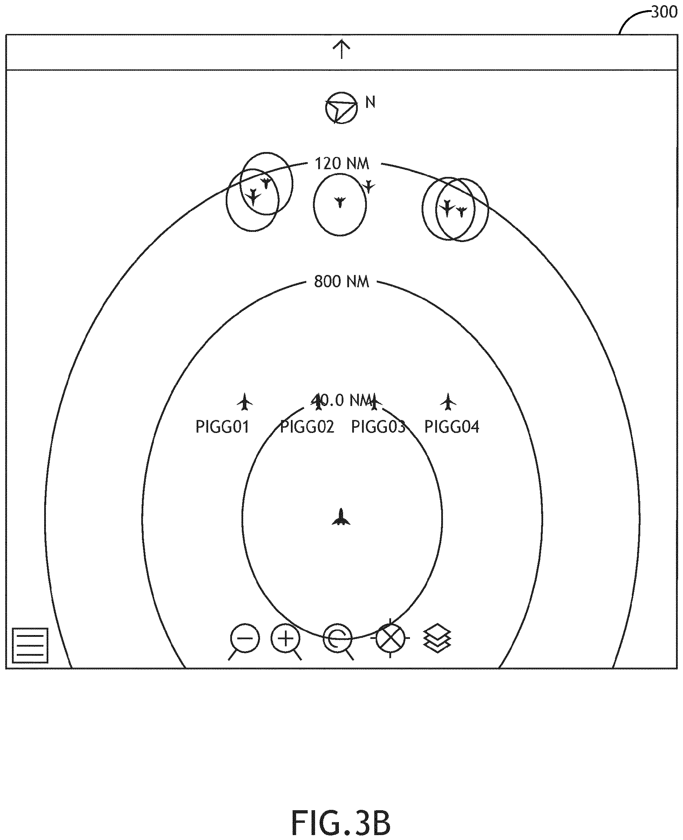

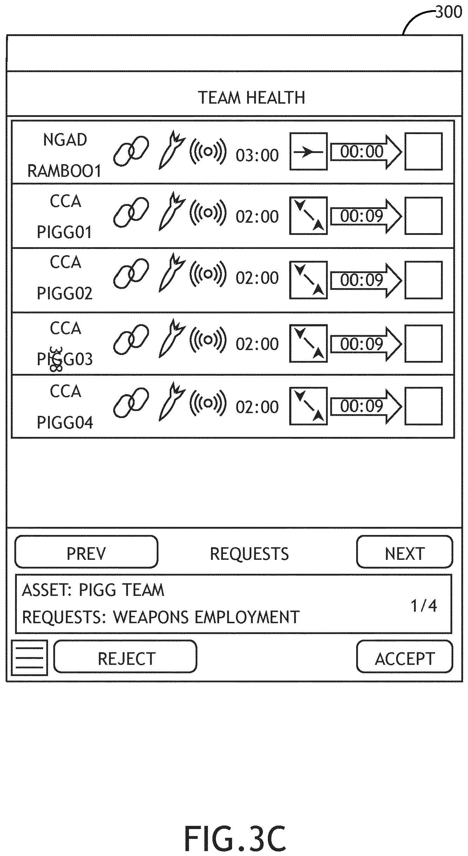

FIGS. 3A through 3C illustrate a display 300 of one or more outputs of the ORF, in accordance with one or more embodiments of the present disclosure.

In embodiments, the user interface 108 (e.g., a human machine interface (HMI)) may include a display 300 (e.g., a first display) including a screen and equipped with voice recognition, communications, aural warnings, and operator input output (I/O) functionality.

In embodiments, the user interface 108 is communicatively coupled to the operations manager 102. For example, the user interface 108 may receive state data including, but not limited to, a set of tasks, a plan, one or more accessible assets, an outcome assessment, and explainability metrics from the operations manager 102. By way of another example, the user interface 108 may be configured to communicate one or more inputs received from an operator to the operations manager 102.

In embodiments, the user interface 108 may be configured to display a variety of data to the user. For example, the user interface 108 may display the current objective, task lists and states, and a current plan at a domain appropriate level of detail. By way of another example, the user interface 108 may display the percentage associated with the likelihood of a particular outcome in a domain appropriate way (e.g., radar chart, scorecard, map view, and the like). By way of another example, the user interface 108 may display the rationale behind why the plan was determined (e.g., explainability metrics) at a domain appropriate level of detail.

In embodiments, the user interface 108 is further configured to display at least one of environment data, secondary and tertiary plans, and a map conveying the spatial nature of a plan.

In embodiments, the user interface 108 is configured to allow an operator to manually change and adjust the plan or particular aspects of the plan. For example, the user interface 108 may be configured to accept assignments and authorize tasks to support operator in/on the loop functionality. By way of another example, the user interface 108 may be utilized by the operator to impose a bias on the planner 104 toward specific core behaviors, or prioritize certain objectives (e.g., reordering of objectives according to priority, slider bars, balancing between two conflicting objectives, and the like). By way of another example, the user interface 108 may allow for altering the input states to display alternate plans under "what-if" conditions. By way of another example, the user interface 108 may be configured to amalgamate the data produced by a set of teams implementing the ORF into a single control center view.

It is noted herein that one or more modules of system 100 including, but not limited to, the operations manager 102, the OAM 106, the planner 104, and the user interface 108 may be necessary across all implementations of system 100.

In embodiments, system 100 includes one or more salient design features. For example, the determination of tasks assigned to assets may be decentralized, placing emphasis on what each asset should be tasked to do rather than prescribing how the tasks should be executed. It is noted herein that while task execution logic is not explicitly dictated by implementation of system 100, the planner 104 may indirectly take this into consideration during the assignment process. The planner 104 may be trained on a simulation that encapsulates realistic task execution behaviors, fostering a dynamic and informed decision-making process. The relationship between the various implementations of system 100 and the planner 104 mirrors that of the OAMs 106 with the planner 104. The various implementations of OAMs 106 offer accurate outcome likelihoods contingent upon the execution of the plan devised by the planner 104. This collaborative framework ensures a cohesive integration of planning, execution, and outcome assessment components within the ORF.

In embodiments, each domain-specific implementation of system 100 operates as a centralized planning capability. For example, the planner 104, may engage in reasoning from a centralized application. It evaluates the states of the environment and the states of all available assets to formulate a comprehensive plan. While the one or more accessible assets may communicate amongst themselves in a distributed manner to coordinate task execution, report task states, or measure the environment state, the pivotal mapping of assets to tasks originates from the single centralized ORF planner 104 instance. In cases where redundancy is paramount, multiple collocated redundant planner 104 instances may be employed to ensure the robustness and reliability of the planning process. This centralized planning approach may optimize decision-making coherence and efficiency within the dynamic and diverse landscapes of various operational domains.

The numerous advantages of the present disclosure may be better understood with reference to multiple examples. In this regard, the following examples are provided to assist those skilled in the art to better understand the numerous advantages of the present disclosure, and are not to be understood as limiting.

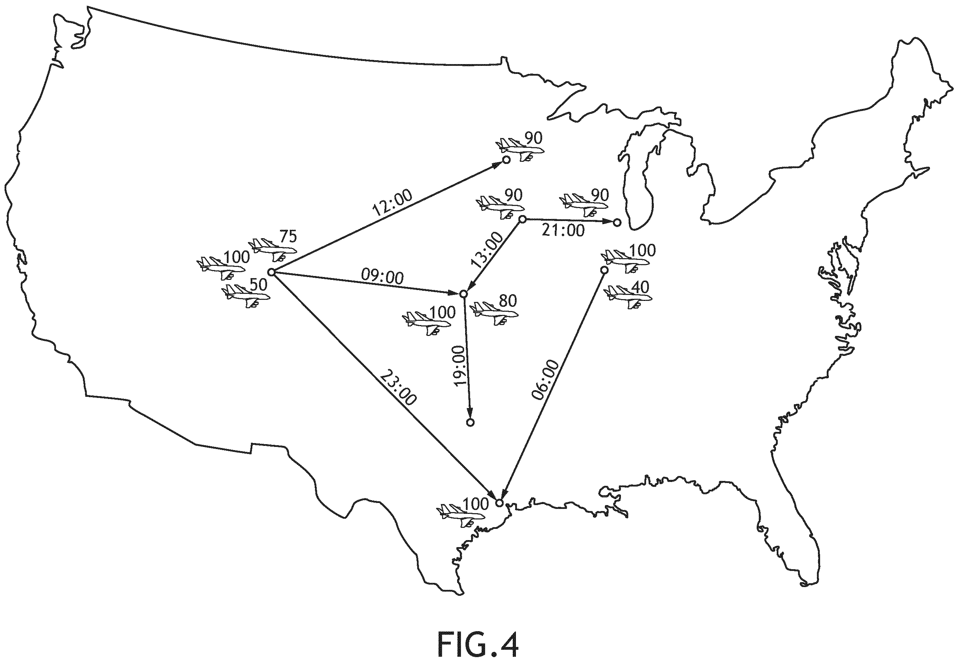

In a first example, the ORF is implemented within a commercial aircraft routing domain, as shown in FIG. 4. For example, the ORF may provide dispatch and diversion reasoning to the one or more accessible assets (i.e., aircraft).

In embodiments, the operational reasoning system 100 receives data corresponding to one or more accessible assets within the commercial aircraft routing domain. For example, the one or more accessible assets may include one or more aircraft from a fleet of aircraft. By way of another example, the one or more aircraft may include a known set of routes needed to fly over a given time horizon. Each aircraft of the fleet of aircraft may require at least one of a planned or unplanned maintenance. In embodiments, the planner 104 may perform a simulation based on the routes and the expected maintenance of each aircraft. For example, each aircraft may be given a health score indicating a current health of the aircraft and an estimate of how long before maintenance is needed. Based on at least the simulation and inputs to the planner 104, a plan may be determined to optimize the assigning of the fleet of aircraft (e.g., assets) to the set of routes (e.g., tasks). The system 100 may further be configured to provide an outcome assessment and one or more insights regarding why this specific plan was determined and what is the likelihood of a particular outcome.

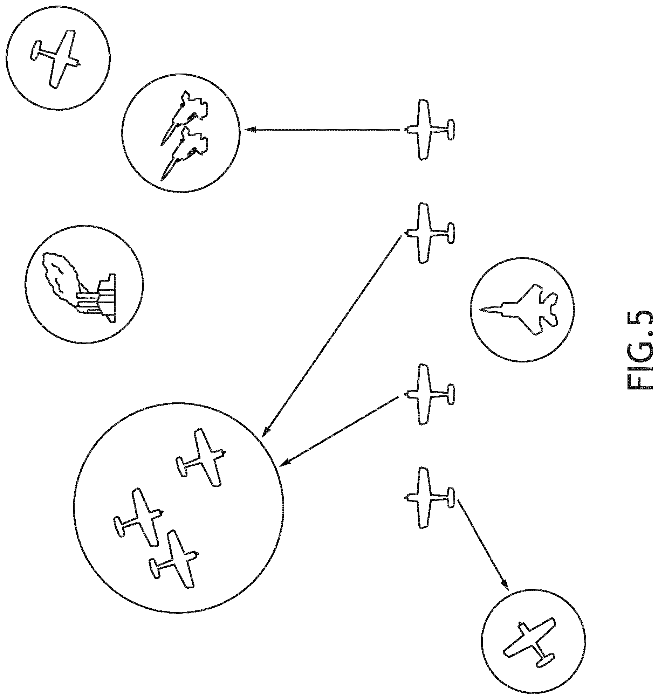

In a second example, the ORF is implemented within a military mission domain, as shown in FIG. 5. For example, the ORF may provide mission-related reasoning to the one or more accessible assets (i.e., aircraft, UAS, UUS, UMS, and the like).

In embodiments, the operations manager 102 of system 100 may identify one or more accessible assets (e.g., aircraft) to achieve a mission objective within a military domain. For example, the planner 104 may be configured to simulate the mission based on received state data in real-time. The state data may include information associated with an environment, one or more accessible assets, a set of tasks, task statuses associated with the set of tasks, and a current plan. In embodiments, an objective (e.g., attack enemy target), within the military domain, may include a weight or level of priority with it. For example, the system 100 may include a secondary objective, a tertiary objective, and up to an n^{th} objective, where each objective is assigned a level of importance.

By way of another example, as the set of tasks for the given objective are completed, or as the scenario evolves, the one or more assets may be reassigned to new tasks until the mission objective is fulfilled. It is noted herein that the set of tasks may be completed by or with the help of an unmanned asset team (e.g., UAS, UUS, UMS). For example, the operating environment may be highly dynamic, such that enemy entities may pop up and move around, and assets may be gained or lost throughout the mission. As a result, objectives may be broken into assignable tasks and assigned to assets such that mission success and team survivability is optimized.

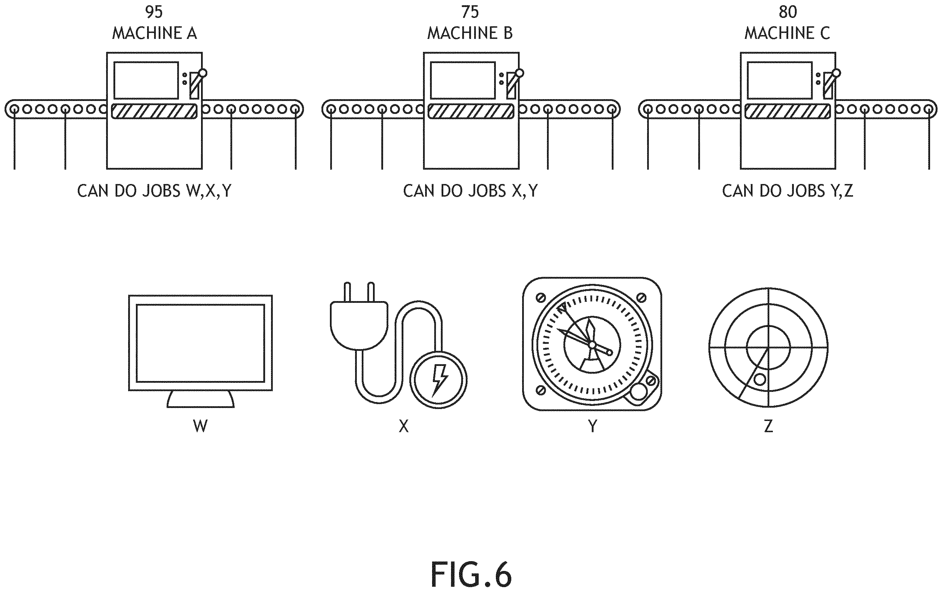

In a third example, the ORF is implemented within a manufacturing domain, as shown in FIG. 6. For example, the ORF may provide factory operations reasoning to the one or more accessible assets (i.e., machines).

In embodiments, a factory may include one or more accessible assets (e.g., machines) that are responsible for carrying out one or more tasks of the set of tasks. For example, the operations manager 102 of system 100 may receive an objective associated with a set of parts needed to be manufactured and associated with a specific deadline. For example, different machines may produce subsets of all parts in a required quota, and different jobs may take different machines variable amounts of time. These machines also require maintenance (e.g., planned, or unplanned). In embodiments, the planner 104 of system 100 may be configured to perform one or more simulations in real-time based on received state data including at least one of the set of parts, accessible machines, planned or unplanned maintenance, and the like. For example, the planner 104 may determine a plan for assigning one or more assets (e.g., machines) to a set of tasks (manufacturing steps) and scheduled maintenance events such that production is maximized. By way of another example, the OAM 106 may provide a health score to the one or more assets (e.g., machines) indicating how soon a particular machine will likely need maintenance.

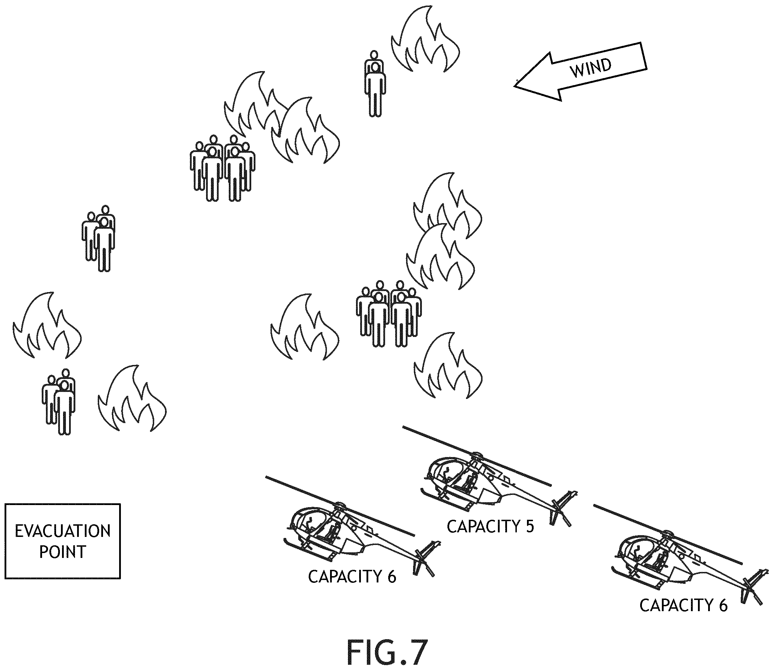

In a fourth example, the ORF is implemented within an evacuation and rescue mission domain, as shown in FIG. 7. For example, the ORF may provide evacuation reasoning to the one or more accessible assets (i.e., helicopters).

In embodiments, the operations manager 102 may be configured to receive data associated with a disaster evacuation and a corresponding objective. For example, the planner 104 of the system 100 may be configured to assign one or more assets (e.g., evacuation vehicles) to one or more rescue locations to maximize a number of lives that are saved. By way of another example, the planner 104 may be configured to continuously receive state data based on new events or circumstances associated with the disaster. Upon receipt of the state date, the planner 104 is configured to perform faster than real-time simulations and output a plan. By way of another example, the OAMs 106 may be configured to provide one or more insights associated with a rationale behind the determination of the plan to the user. By way of another example, the OAMs 106 may provide an outcome assessment, which includes one or more likely outcomes associated with the plan.

Those having skill in the art will appreciate that there are various vehicles by which processes and/or systems and/or other technologies described herein can be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be effected, none of which is inherently superior to the other in that any vehicle to be utilized is a choice dependent upon the context in which the vehicle will be deployed and the specific concerns (e.g., speed, flexibility, or predictability) of the implementer, any of which may vary.

All the methods described herein may include storing results of one or more steps of the method embodiments in memory. The results may include any of the results described herein and may be stored in any manner known in the art. The memory may include any memory described herein or any other suitable storage medium known in the art. After the results have been stored, the results can be accessed in the memory and used by any of the method or system embodiments described herein, formatted for display to a user, used by another software module, method, or system, and the like. Furthermore, the results may be stored "permanently," "semi-permanently," temporarily," or for some period of time. For example, the memory may be random access memory (RAM), and the results may not necessarily persist indefinitely in the memory.

It is further contemplated that each of the embodiments of the method described above may include any other step(s) of any other method(s) described herein. In addition, each of the embodiments of the method described above may be performed by any of the systems described herein.

One skilled in the art will recognize that the herein described components (e.g., operations), devices, objects, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components (e.g., operations), devices, and objects should not be taken limiting.

The herein described subject matter sometimes illustrates different components contained within, or connected with, other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "connected," or "coupled," to each other to achieve the desired functionality, and any two components capable of being so associated can also be viewed as being "couplable," to each other to achieve the desired functionality. Specific examples of couplable include but are not limited to physically mateable and/or physically interacting components and/or wirelessly interactable and/or wirelessly interacting components and/or logically interacting and/or logically interactable components.

Furthermore, it is to be understood that the invention is defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," and the like). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, and the like" is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, and the like). In those instances where a convention analogous to "at least one of A, B, or C, and the like" is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, and the like). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

It is believed that the present disclosure and many of its attendant advantages will be understood by the foregoing description, and it will be apparent that various changes may be made in the form, construction and arrangement of the components without departing from the disclosed subject matter or without sacrificing all its material advantages. The form described is merely explanatory, and it is the intention of the following claims to encompass and include such changes. Furthermore, it is to be understood that the invention is defined by the appended claims

## Claims

1. A system (100) comprising:
a server comprising a memory and one or more processors, wherein the one or more processors are configured to:
receive an objective associated with a mission, wherein the objective implies a set of tasks;
identify one or more accessible assets associated with the mission;
determine a plan for assigning the one or more accessible assets to the set of tasks;
provide one or more insights to a user, wherein the one or more insights are associated with a rationale behind the determination of the plan; and
provide an outcome assessment to the user, wherein the outcome assessment includes one or more likely outcomes associated with the plan.

2. The system of Claim 1, wherein the one or more processors are further configured to assign one or more tasks from the set of tasks to the user.

3. The system of Claim 1 or 2, wherein the one or more accessible assets include a task execution software.

4. The system of Claim 3, further comprising a task interpreter communicatively coupled to the task execution software of the one or more accessible assets, wherein the task interpreter is configured to interpret an assigned task, and optionally wherein the task interpreter is further configured to determine two or more assets of the one or more accessible assets assigned to a same task, and wherein the two or more assets are configured to work together in a distributed way.

5. The system of Claim 3, wherein the one or more processors are further configured to track a task status and task dependency by processing task state outputs received from the task execution software associated with one of the one or more accessible assets, or wherein the one or more processors are further configured to modify the set of tasks using domain specific logical rules based on at least one of an environment, the objective, the one or more accessible assets, and an operator input, or wherein the one or more processors are further configured to consolidate two or more tasks sharing one or more characteristics into a supertask through utilization of a clustering technique, or wherein the one or more processors are further configured to track a secondary plan, wherein the secondary plan comprises a secondary objective.

6. The system of any preceding Claim, wherein the memory is configured to store operational data associated with an execution of one or more tasks by the one or more processors, wherein the stored operational data is used for subsequent analysis, or wherein the one or more likely outcomes associated with the plan include a probability estimation corresponding to each of the one or more likely outcomes.

7. The system of any preceding Claim, further comprising at least one user interface communicatively coupled to the one or more processors, and optionally , wherein the at least one user interface is configured to display at least one of the one or more insights or the outcome assessment to the user, or wherein the at least one user interface is configured to allow the user to input and modify states or outputs associated with the mission.

8. The system of Claim 7, wherein the at least one user interface is configured to display at least one of the objective, the set of tasks, and the plan to the user.

9. A method comprising:
receiving an objective associated with a mission, wherein the objective implies a set of tasks;
identifying one or more accessible assets associated with the mission;
determining a plan for assigning the one or more accessible assets to the set of tasks;
providing one or more insights to a user, wherein the one or more insights are associated with a rationale behind the determination of the plan; and
providing an outcome assessment to the user, wherein the outcome assessment includes one or more likely outcomes associated with the plan.

10. The method of Claim 9, further comprising the assigning the one or more tasks from the set of tasks to the user.

11. The method of Claim 9 or 10, wherein the one or more accessible assets include a task execution software, and optionally wherein the one or more accessible assets comprise a task interpreter communicatively coupled to the task execution software, wherein the task interpreter is configured to interpret an assigned task, and optionally wherein the task interpreter is further configured to determine two or more assets of the one or more accessible assets assigned to a same task, and wherein the two or more assets are configured to work together in a distributed way.

12. The method of Claim 11, further comprising tracking a task status and task dependency by processing task state outputs received from the task execution software associated with one of the one or more accessible assets, or further comprising modifying the set of tasks using domain specific logical rules based on at least one of an environment, the objective, the one or more accessible assets, or an operator input, or further comprising consolidating two or more tasks sharing one or more characteristic into a supertask through utilization of a clustering technique.

13. The method of any of Claims 9 to 12, further comprising:
tracking a secondary plan, wherein the secondary plan comprises a secondary objective, or further comprising:
storing operational data associated with an execution of one or more tasks, wherein the stored operational data is used for subsequent analysis.

14. The method of any of Claims 9 to 13, wherein the providing an outcome assessment to the user further comprises a probability estimation corresponding to each of the one or more likely outcomes.

15. The method of any of Claims 9 to 14, further comprising:
displaying at least one of the one or more insights or the outcome assessment to the user via a user interface, or further comprising:
allowing the user to input and modify states or outputs associated with the mission via a user interface, or further comprising:
displaying at least one of the objective, the set of tasks, and the plan to the user via a user interface.
